# EUROPEAN PATENT SPECIFICATION

(11) **EP 4 506 280 B1**
(45) Date of publication and mention of the grant of the patent: **01.04.2026**
(21) Application number: 23810810.4
(22) Date of filing: 08.05.2023
(51) Int. Cl.: B65G 15/60, B65G 39/073, B65G 45/20, B65G 45/18

(54) **BELT CONVEYOR LOWER CARRIER ROLLER DEVICE HAVING SWEEPING AND CLEANING FUNCTIONS, AND BELT CONVEYOR**
GURTFÖRDERER-UNTERTRÄGERROLLENVORRICHTUNG MIT KEHR- UND REINIGUNGSFUNKTIONEN SOWIE GURTFÖRDERER
DISPOSITIF DE ROULEAU DE SUPPORT INFÉRIEUR DE TRANSPORTEUR À COURROIE AYANT DES FONCTIONS DE BALAYAGE ET DE NETTOYAGE, ET TRANSPORTEUR À COURROIE

(30) Priority: 27.05.2022 CN 202210591040
(43) Date of publication of application: 12.02.2025
(73) Proprietor: BAOSHAN IRON & STEEL CO., LTD., Shanghai 201900 (CN)
(72) Inventor: DING, Ye, Shanghai 201900 (CN); WU, Ruimin, Shanghai 201900 (CN); YANG, Bin, Shanghai 201900 (CN); SHEN, Chen, Shanghai 201900 (CN)
(74) Representative: Maiwald GmbH
(86) International application number: PCT/CN2023/092712
(87) International publication number: WO 2023/226737

(56) References cited:
- CN-A- 101 704 445
- CN-A- 108 726 134
- CN-A- 110 525 924
- CN-A- 112 278 785
- CN-A- 112 298 962
- CN-U- 206 634 667
- CN-U- 208 828 612
- CN-U- 211 812 000
- DE-U1- 202008 005 300
- US-A- 2 628 709
- US-A- 3 661 246
- US-A- 4 439 173

## Description

The disclosure relates to industrial material transportation equipment, more specifically, relates to a lower carrier roller device for a belt conveyor having sweeping and cleaning functions, and a belt conveyor.

### BACKGROUND ART

Belt conveyor (also called ribbon conveyor or band conveyor) has the characteristics of high efficiency and low cost, and is widely used in mine, dock, coal, electric power generation and metallurgy industries. Sweeper of the existing belt conveyor mainly adopts the form of mechanical scrapers or the form of electric roller brushes. The form of mechanical scrapers adopts spring or counterweight pre-tightening force to attach the scraper to the belt surface for scraping off the bonded raw materials. The form of electric roller brush adopts a motor to drive a cylindrical nylon brush, so that the brush tip is in contact with the surface of the conveyor belt, thereby removing the adherents affixed to the surface of the belt. Due to various reasons such as the rigidity and length of the scraper and the elastic belt, the sweeper in the form of a mechanical scraper cannot ensure full contact between the scraper and the belt surface along the entire length of the belt width direction during use, resulting in incomplete cleaning. Due to the factors such as alternating contact and vibration of belt and carrier roller during the subsequent return process, the bonded raw materials may fall under the belt. Therefore, sometimes these two types of sweepers are used together. However, both the above two types of cleaners have a disadvantage that the sweepers are in direct contact with the belt and constantly rub against the belt surface, which can easily cause abrasion on the belt surface and reduction of the service life of the belt.

CN 112 278 785 A describes a carrier roller device for belt conveyor according to the preamble of claim 1.

### SUMMARY OF THE INVENTION

In view of the above-mentioned defects in the prior art, the objects of the present disclosure are to provide a lower carrier roller device for belt conveyor having sweeping and cleaning functions, and a belt conveyor, so that the lower carrier roller has sweeping and cleaning functions while supporting the return belt, and direct contact between a traditional sweeping mechanism and a belt is avoided, thereby reducing abrasion to the surface of the belt conveyor.

In order to achieve the above objects, the present disclosure adopts the following technical solutions.

The present invention provides a lower carrier roller device according to claim 1 and a belt conveyor according to claim 8.

Preferred embodiments are subject-matter of the dependent claims.

In one aspect, provided is a lower carrier roller device according to claim 1 for belt conveyor having sweeping and cleaning functions, comprising a lower carrier roller assembly and a sweeping roller brush assembly arranged on one side of the lower carrier roller assembly, wherein the sweeping roller brush assembly is fit with the lower carrier roller assembly;
wherein the lower carrier roller assembly comprises a lower carrier roller, which is arranged along a running direction of a return belt of the belt conveyor, and wherein a surface of the lower carrier roller is configured to a rhombic grid shape;
wherein the sweeping roller brush assembly comprises a roller brush shaft and a roller brush arranged on the roller brush shaft, the roller brush shaft is arranged parallel to and below the lower carrier roller, and the roller brush is fit with the surface of the lower carrier roller.

The rhombic grid shape is composed of multiple sets of arc grooves, the multiple sets of arc grooves are evenly spaced along the lower carrier roller, and the arc grooves are arranged in a clockwise and counterclockwise spiral pattern.

Preferably, the arc grooves are configured as 1/8 to 1/2 of a circle, with a diameter of ≤5 mm.

Preferably, the roller brush is composed of multiple bundles of bristles, with the diameter of the bristles being smaller than the diameter of the arc grooves.

Preferably, the roller brush shaft has a hollow structure and has a plurality of ventilation holes on its surface.

Preferably, the lower roller has a spindle-shaped structure, with the diameter gradually decreasing from the middle position toward both ends.

Preferably, the lower carrier roller is made of hydrophobic material(s).

Preferably, the sweeping roller brush assembly further includes a driving device for driving the roller brush shaft to rotate.

In another aspect, provided is a belt conveyor according to claim 8, comprising one or more stages of the lower carrier roller device for belt conveyor having sweeping and cleaning functions, wherein the one or more stages of the lower carrier roller device for belt conveyor are arranged along the running direction of the return belt of the belt conveyor.

Preferably, the multiple stages of the lower carrier roller device for belt conveyor are arranged in sequence along the running direction of the return belt of the belt conveyor;
along the running direction of the return belt of the belt conveyor, the spacing of the arc grooves of the lower carrier roller device for belt conveyor gradually decreases;
along the running direction of the return belt of the belt conveyor, the diameter of the arc grooves of the lower carrier roller device for belt conveyor gradually decreases.

The disclosure provides a lower carrier roller device for belt conveyor having sweeping and cleaning functions and belt conveyor. Through the rhombic grid shaped arc grooves on the surface of the lower carrier roller and the friction between the lower roller and the return belt, the adhesive materials attached to the surface of the lower carrier roller is ground into fine particles and embedded in the arc grooves, thereby destroying their integrity, cutting them into blocks, and making it easier for them to fall off the surface of the return belt. Furthermore, a sweeping roller brush is used to remove the adhesive materials from the surface of the lower carrier roller, avoiding direct contact between the sweeping mechanism and the belt surface, thereby reducing the abrasion of the belt. The spindle-shaped design of the lower carrier roller ensures full contact between the middle belt which has the most contact with the transported materials and the lower carrier roller, guaranteeing the quality of sweeping and cleaning.

### DESCRIPTION OF THE DRAWINGS

Figure 1 is a schematic structural diagram of the lower carrier roller device for belt conveyor of the present disclosure.
Figure 2 is a schematic side view of the lower carrier roller device for belt conveyor of the present disclosure.
Figure 3 is a schematic structural diagram of the lower carrier roller in the lower carrier roller device for belt conveyor of the present disclosure.
Figure 4 is a schematic diagram of the spindle-shaped structure of the lower carrier roller in the lower carrier roller device for belt conveyor of the present disclosure.
Figure 5 is a schematic cross-sectional view of an arc groove on the surface of the lower carrier roller in the lower carrier roller device for belt conveyor when it is configured as 1/2 of a circle.
Figure 6 is a schematic cross-sectional view of an arc groove on the surface of the lower roller in the lower carrier roller device for belt conveyor when it is configured as 1/8 of a circle.
Figure 7 is a schematic structural diagram of the sweeping roller brush assembly in the lower carrier roller device for belt conveyor of the present disclosure.

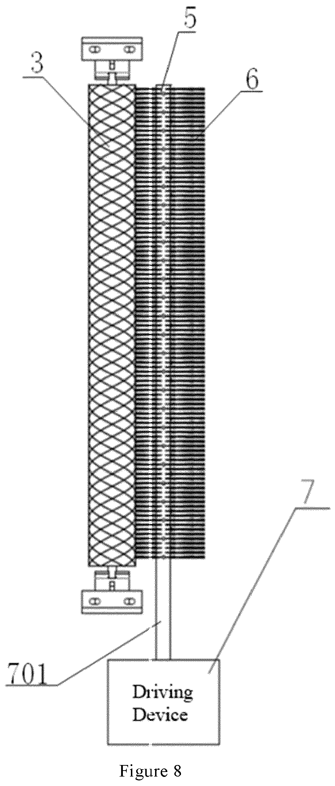

Figure 8 is a schematic diagram of the arrangement of the driving device in the lower carrier roller device for belt conveyor of the present disclosure.

### DETAILED DESCRIPTION

In order to better understand the above technical solutions of the present disclosure, the technical solutions of the present disclosure are further described below in conjunction with the accompanying drawings and examples.

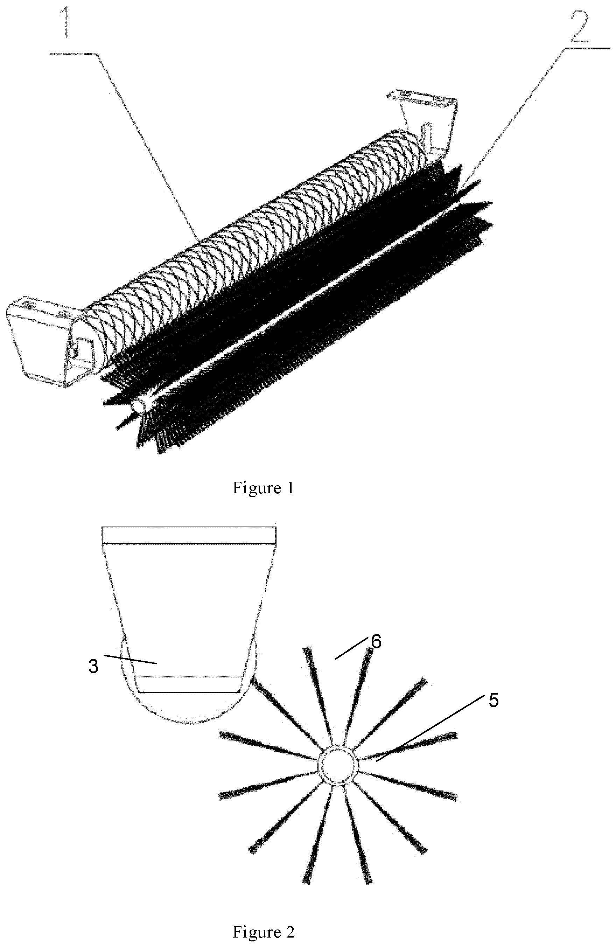

As shown in Figure 1 and Figure 2, the disclosure provides a lower carrier roller device for belt conveyor having sweeping and cleaning functions, which comprises a lower carrier roller assembly **1** and a sweeping roller brush assembly **2** arranged on one side of the lower carrier roller assembly **1** and cooperated with the lower carrier roller assembly **1.**

The lower carrier roller assembly **1** comprises a lower carrier roller **3** arranged along the running direction of a return belt of the belt conveyor, and the surface of the lower carrier roller is configured to a rhombic grid shape.

The sweeping roller brush assembly **2** comprises a roller brush shaft **5** arranged parallel to and below the lower carrier roller **3** and a roller brush **6** arranged on the roller brush shaft **5.** The roller brush **6** is distributed circumferentially along the roller brush shaft **5.** The roller brush **6** is cooperated with the surface of the lower carrier roller **3.**

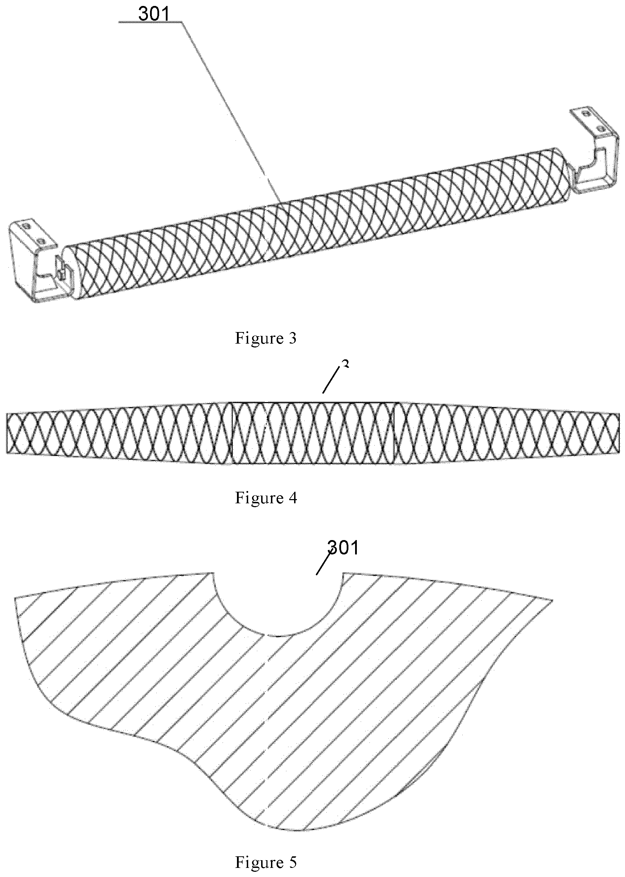

As shown in Figure 3 to Figure 6, the rhombic grid shape is composed of multiple sets of arc grooves **301,** and the arc grooves **301** are evenly spaced in a clockwise and counterclockwise spiral pattern along the surface of the lower carrier roller **3.**

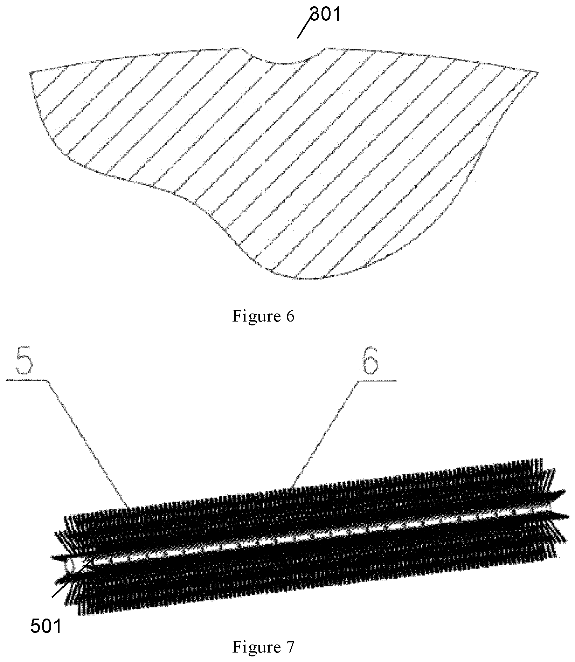

Referring to Figures 5 and Figure 6, Figure 5 shows a schematic cross-sectional view of the arc grooves being 1/2 of a circle, and Figure 6 shows a schematic cross-section of the arc grooves being 1/8 of a circle. The arc grooves **301** are configured as 1/8 to 1/2 of a circle, and the diameter of the arc grooves **301** are ≤5mm.

The lower carrier roller **3** has a spindle-shaped structure, with the diameter gradually decreasing from the middle position toward both ends to ensure that the adhesive materials in the middle of the return belt is fully in contact with the surface of the lower carrier roller **3.**

The lower carrier roller **3** is made of hydrophobic materials to reduce the adhesion of raw materials.

As shown in Figure 7, the roller brush **6** is composed of multiple bundles of bristles, and the diameter of the bristles is smaller than the diameter of the arc grooves **301.**

The roller brush shaft **5** has a hollow structure, and a plurality of ventilation holes **501** are provided on its surface to ventilate the inside of the roller brush shaft 5 for purging operations.

With the rhombic grid shaped arc grooves **301** on the surface of the lower carrier roller **3** in the lower carrier roller device for belt conveyor of the present disclosure, the adhesive materials attached to the surface of the lower carrier roller is ground into fine particles and embedded in the arc grooves by utilizing the friction between the lower roller and the return belt, thereby destroying their integrity and cutting them into blocks, making it easier for them to fall off the surface of the return belt. Furthermore, a roller brush **6** of the sweeping roller brush assembly is used to remove the adhesive materials from the surface of the lower carrier roller, avoiding direct contact between the sweeping mechanism and the return belt surface, thereby reducing the abrasion of the return belt.

The rotation of the sweeping roller brush assembly **2** may be powered by the rotation of the lower carrier roller **3,** which drives the rotation of the roller brush shaft **5,** without the need for an external power source. Alternatively, as shown in Figure 7, in order to further enhance its sweeping effect, the sweeping roller brush assembly **2** also comprises a driving device **7,** with the output end **701** of the driving device 7 connected to the end of the roller brush shaft **5,** providing a power source for the sweeping roller brush assembly **2** to drive the rotation of the roller brush shaft **5.**

The disclosure also provides a belt conveyor, which comprises one or more stages of the lower carrier roller device for belt conveyor having sweeping and cleaning functions arranged in the running direction of the return belt of the belt conveyor.

The multiple stages of the lower carrier roller device for belt conveyor installed in sequence in the running direction of the return belt of the belt conveyor.

Along the running direction of the return belt of the belt conveyor, the spacing of the arc grooves **301** of the lower carrier roller device for belt conveyor gradually decreases, that is, along the running direction of the return belt of the belt conveyor, the spacing of the arc grooves **301** of the lower carrier roller device for belt conveyor in the next stage is smaller than that of the previous stage. Along the running direction of the return belt of the belt conveyor, the diameter of the arc grooves **301** of the lower carrier roller device for belt conveyor gradually decreases, that is, along the running direction of the return belt of the belt conveyor, the diameter of the arc grooves **301** of the lower carrier roller device for belt conveyor in the next stage is smaller than that of the previous stage.

Along the running direction of the return belt of the belt conveyor, the bonded transport materials undergo multi-stage cleaning to ensure the cleaning effect. Additionally, the diameter and spacing of the arc grooves **301** of the lower carrier roller device for belt convey in the next stage are smaller than those of the previous stage, resulting in increasingly thorough cleaning.

## Claims

1. A lower carrier roller device for belt conveyor having sweeping and cleaning functions, comprising a lower carrier roller assembly (1) and a sweeping roller brush assembly (2) arranged on one side of the lower carrier roller assembly (1), wherein the sweeping roller brush assembly (2) is fit with the lower carrier roller assembly (1);
wherein the lower carrier roller assembly (1) comprises a lower carrier roller (3), which is arranged along a running direction of a return belt of the belt conveyor;
wherein the sweeping roller brush assembly (2) comprises a roller brush shaft (5) and a roller brush (6) arranged on the roller brush shaft (5), the roller brush shaft (5) is arranged parallel to and below the lower carrier roller (3), and the roller brush (6) is fit with the surface of the lower carrier roller (3),
**characterized in that** a surface of the lower carrier roller (3) is configured to a rhombic grid shape,
wherein the rhombic grid shape is composed of multiple sets of arc grooves (301), the multiple sets of arc grooves (301) are evenly spaced along the lower carrier roller (3), and the arc grooves (301) are arranged in a clockwise and counterclockwise spiral pattern.

2. The lower carrier roller device for belt conveyor according to claim 1,
wherein the arc grooves (301) are configured as 1/8 to 1/2 of a circle, with a diameter of ≤5 mm.

3. The lower carrier roller device for belt conveyor according to claim 2,
wherein the roller brush (6) is composed of multiple bundles of bristles, with the diameter of the bristles being smaller than the diameter of the arc grooves (301).

4. The lower carrier roller device for belt conveyor according to claim 1,
wherein the roller brush shaft (5) has a hollow structure and has a plurality of ventilation holes (501) on its surface.

5. The lower carrier roller device for belt conveyor according to claim 1,
wherein the lower carrier roller (3) has a spindle-shaped structure, with the diameter gradually decreasing from the middle position toward both ends.

6. The lower carrier roller device for belt conveyor according to claim 1,
wherein the lower carrier roller (3) is made of hydrophobic material(s).

7. The lower carrier roller device for belt conveyor according to claim 1,
wherein the sweeping roller brush assembly (2) further includes a driving device (7) for driving the roller brush shaft (5) to rotate.

8. A belt conveyor comprising one or more stages of the lower carrier roller device for belt conveyor according to any one of claims 1 to 7, wherein the one or more stages of the lower carrier roller (3) device for belt conveyor are arranged along the running direction of the return belt of the belt conveyor.

9. The belt conveyor according to claim 8, wherein the multiple stages of the lower carrier roller (3) device for belt conveyors are arranged in sequence along the running direction of the return belt of the belt conveyor;
along the running direction of the return belt of the belt conveyor, the spacing of the arc grooves (301) of the lower carrier roller (3) device for belt conveyor gradually decreases;
along the running direction of the return belt of the belt conveyor, the diameter of the arc grooves (301) of the lower carrier roller (3) device for belt conveyor gradually decreases.

## Patentansprüche

1. Untere Tragrollenvorrichtung für Bandförderer mit Kehr- und Reinigungsfunktion, umfassend eine untere Tragrollenanordnung (1) und eine Kehrwalzenbürstenanordnung (2), die an einer Seite der unteren Tragrollenanordnung (1) angeordnet ist, wobei die Kehrwalzenbürstenanordnung (2) an der unteren Tragrollenanordnung (1) anliegt,
wobei die untere Tragrollenanordnung (1) eine untere Tragrolle (3) umfasst, die in Laufrichtung des Rücklaufbandes des Bandförderers angeordnet ist,
wobei die Kehrwalzenbürstenanordnung (2) eine Walzenbürstenwelle (5) und eine auf der Walzenbürstenwelle (5) angeordnete Walzenbürste (6) umfasst, wobei die Walzenbürstenwelle (5) parallel zur und unterhalb der unteren Tragrolle (3) angeordnet ist und die Walzenbürste (6) an der Oberfläche der unteren Tragrolle (3) anliegt,
**dadurch gekennzeichnet, dass** die Oberfläche der unteren Tragrolle (3) rautenförmig strukturiert ist,
wobei die rautenförmige Strukturierung aus mehreren Sätzen von Bogennuten (301) aufgebaut ist, die gleichmäßig entlang der unteren Tragrolle (3) verteilt sind und spiralförmig im Uhrzeigersinn und gegen den Uhrzeigersinn verlaufen.

2. Untere Tragrollenvorrichtung für Bandförderer nach Anspruch 1, wobei die Bogennuten (301) als 1/8 bis 1/2 eines Kreises mit einem Durchmesser von ≤ 5 mm ausgebildet sind.

3. Untere Tragrollenvorrichtung für Bandförderer nach Anspruch 2, wobei die Walzenbürste (6) aus mehreren Borstenbündeln aufgebaut ist, deren Durchmesser kleiner ist als der Durchmesser der Bogennuten (301).

4. Untere Tragrollenvorrichtung für Bandförderer nach Anspruch 1, wobei die Walzenbürstenwelle (5) hohl ist und mehrere Belüftungsöffnungen (501) an ihrer Oberfläche aufweist.

5. Untere Tragrollenvorrichtung für Bandförderer nach Anspruch 1, wobei die untere Tragrolle (3) spindelförmig ist und sich ihr Durchmesser von der Mitte zu den Enden hin verringert.

6. Untere Tragrollenvorrichtung für Bandförderer nach Anspruch 1, wobei die untere Tragrolle (3) aus einem hydrophoben Material gefertigt ist.

7. Untere Tragrollenvorrichtung für Bandförderer nach Anspruch 1, wobei die Kehrwalzenbürstenanordnung (2) ferner eine Antriebsvorrichtung (7) zum Drehen der Walzenbürstenwelle (5) umfasst.

8. Bandförderer, umfassend eine oder mehrere Stufen der unteren Tragrollenvorrichtung (3) für Bandförderer gemäß einem der Ansprüche 1 bis 7, wobei die eine oder die mehreren Stufen der unteren Tragrollenvorrichtung (3) für Bandförderer in Laufrichtung des Rücklaufbandes des Bandförderers angeordnet sind.

9. Bandförderer nach Anspruch 8, wobei die mehreren Stufen der unteren Tragrollenvorrichtung (3) für Bandförderer in Laufrichtung des Rücklaufbandes des Bandförderers angeordnet sind,
wobei sich der Abstand der Bogennuten (301) der unteren Tragrollenvorrichtung (3) für Bandförderer in Laufrichtung des Rücklaufbandes für Bandförderer allmählich verringert,
wobei sich der Durchmesser der Bogennuten (301) der unteren Tragrollenvorrichtung (3) für Bandförderer in Laufrichtung des Rücklaufbandes des Bandförderers allmählich verringert.

## Revendications

1. Dispositif de rouleau porteur inférieur pour convoyeur à courroie ayant des fonctions de balayage et de nettoyage, comprenant un ensemble (1) de rouleau porteur inférieur et un ensemble (2) de brosse-rouleau de balayage agencé sur un côté de l'ensemble (1) de rouleau porteur inférieur, dans lequel l'ensemble (2) de brosse-rouleau de balayage est en adéquation avec l'ensemble (1) de rouleau porteur inférieur ;
dans lequel l'ensemble (1) de rouleau porteur inférieur comprend un rouleau porteur inférieur (3), qui est agencé suivant un sens de marche d'une courroie de retour du convoyeur à courroie ;
dans lequel l'ensemble (2) de brosse-rouleau de balayage comprend un arbre (5) de brosse-rouleau et une brosse-rouleau (6) agencée sur l'arbre (5) de brosse-rouleau, l'arbre (5) de brosse-rouleau est agencé parallèlement au rouleau porteur inférieur (3) et en dessous de celui-ci, et la brosse-rouleau (6) est en adéquation avec la surface du rouleau porteur inférieur (3),
**caractérisé en ce qu'**une surface du rouleau porteur inférieur (3) est configurée en forme de grille rhombique,
dans lequel la forme de grille rhombique est composée de multiples jeux de rainures d'arc (301), les multiples jeux de rainures d'arc (301) sont espacés uniformément le long du rouleau porteur inférieur (3), et les rainures d'arc (301) sont agencées selon un motif en spirale dans le sens horaire et antihoraire.

2. Dispositif de rouleau porteur inférieur pour convoyeur à courroie selon la revendication 1, dans lequel les rainures d'arc (301) sont configurées comme 1/8 à 1/2 d'un cercle, avec un diamètre ≤ 5 mm.

3. Dispositif de rouleau porteur inférieur pour convoyeur à courroie selon la revendication 2, dans lequel la brosse-rouleau (6) est composée de multiples faisceaux de poils, le diamètre des poils étant inférieur au diamètre des rainures d'arc (301).

4. Dispositif de rouleau porteur inférieur pour convoyeur à courroie selon la revendication 1, dans lequel l'arbre (5) de brosse-rouleau présente une structure creuse et présente une pluralité de trous de ventilation (501) sur sa surface.

5. Dispositif de rouleau porteur inférieur pour convoyeur à courroie selon la revendication 1, dans lequel le rouleau porteur inférieur (3) présente une structure en forme de broche, le diamètre diminuant progressivement à partir de la position médiane vers les deux extrémités.

6. Dispositif de rouleau porteur inférieur pour convoyeur à courroie selon la revendication 1, dans lequel le rouleau porteur inférieur (3) est constitué de matériau(x) hydrophobe(s).

7. Dispositif de rouleau porteur inférieur pour convoyeur à courroie selon la revendication 1, dans lequel l'ensemble (2) de brosse-rouleau de balayage inclut en outre un dispositif d'entraînement (7) permettant d'entraîner l'arbre (5) de brosse-rouleau en rotation.

8. Convoyeur à courroie comprenant un ou plusieurs étages du dispositif de rouleau porteur inférieur pour convoyeur à courroie selon l'une des revendications 1 à 7, dans lequel les un ou plusieurs étages du dispositif de rouleau porteur inférieur (3) pour convoyeur à courroie sont agencés suivant le sens de marche de la courroie de retour du convoyeur à courroie.

9. Convoyeur à courroie selon la revendication 8, dans lequel les multiples étages du dispositif de rouleau porteur inférieur (3) pour convoyeurs à courroie sont agencés en séquence suivant le sens de marche de la courroie de retour du convoyeur à courroie ;
suivant le sens de marche de la courroie de retour du convoyeur à courroie, l'espacement des rainures en arc (301) du dispositif de rouleau support inférieur (3) pour convoyeur à courroie diminue progressivement ;
suivant le sens de marche de la courroie de retour du convoyeur à courroie, le diamètre des rainures en arc (301) du dispositif de rouleau porteur inférieur (3) pour convoyeur à courroie diminue progressivement.
